# EUROPEAN PATENT SPECIFICATION

(11) **EP 0 710 190 B1**
(45) Date of publication and mention of the grant of the patent: **15.10.1997**
(21) Application number: 94922942.1
(22) Date of filing: 28.07.1994
(51) Int. Cl.: B60J 5/04, B60R 21/13

(54) **REINFORCING BEAM**
AUFPRALLTRÄGER
PROFILE DE RENFORCEMENT

(30) Priority: 28.07.1993 GB 9315579
(43) Date of publication of application: 08.05.1996
(73) Proprietor: BRITISH ALUMINIUM HOLDINGS LIMITED, Manchester M5 2SP (GB)
(72) Inventor: BARTLETT, Anthony George, 11 Briar Close, Oxon OX16 9DS (GB); HALL, Roger, William, Northampton NN4 9PZ (GB); MEADOWS, David John, 15 Blackwood Place, Banbury Oxon OX15 4BD (GB); SEEDS, Alan Dennis, 3 Thatchers Close, Banbury Oxon (GB); PAGE-JONES, Geoffrey, Bishops Frome Worcestershire WR6 5AY (GB)
(74) Representative: Wise, Stephen James
(86) International application number: GB9401632
(87) International publication number: WO9503948

(56) References cited:
- EP-A- 0 330 759
- EP-A- 0 454 279
- WO-A-93/04886
- DE-C- 3 712 940
- DE-U- 9 215 014
- US-A- 4 684 166
- US-A- 4 796 946
- US-A- 5 080 427

## Description

This invention relates to a reinforcing beam. Such beam may be of the kind known as an intrusion beam for a panel, usually a side panel, of a vehicle. The invention also extends to a vehicle side panel, that may be a door, and that incorporates such an intrusion beam. The reinforcing beam may also constitute a roll-over bar for an open topped vehicle.

A large number of motor vehicle accidents result in a side impact on the vehicle and it is therefore desirable that reinforcement should be provided to protect occupants against inward distortion of the vehicle side walls.

It is well known to provide so-called intrusion beams usually extending generally horizontally and usually within the thickness of vehicle side panels such as doors. It has been commonplace to use steel tubes extending across the panels and fastened to side frame members thereof. A minimum standard against distortion under predetermined test conditions exists in the USA and this standard can readily be met by using steel tubes. However such steel tubes to provide the desired strength characteristics are heavy.

The testing method referred to above may conveniently involve supporting the ends of the beam and applying a bending force to the central part of the beam via a cylindrical member extending transversely of and at right angles to the beam. It has been customary for the member to have a diameter of 30 cms.

In view of weight problems associated with steel beams various proposals have been made to provide beams extruded from a light metal alloy such as an aluminium alloy and being formed with cross-sectional shapes to enhance their desired strength characteristics.

It is thus known to extrude such beams from an aluminium alloy having an annular cross-sectional shape. In the past the cross-sectional shape has usually been rectangular. It is also known to provide webs joining opposed walls of the beam.

There are always constraints imposed upon the cross-sectional shape and dimensions of such beams if they are to fit into an available space, for example, in a vehicle door. However, merely conforming to such constraints and seeking to reduce mass per unit length and then producing the strongest possible beam is not the best solution. It is important that the manner in which the beam distorts under impact should be controlled.

Such controlled distortion requires that the outer envelope and web(s) of the beam should distort and partially collapse in a pre-determined manner when subject to the test conditions set out above.

A reinforcing beam according to the preamble of claim 1 is known from WO-A-93/04886.

One aspect of the present invention therefore provides a reinforcing beam comprising a hollow extrusion of a light metal alloy having an outer envelope that is generally quadrilateral in cross-sectional shape with a pair of opposed walls joined by a pair of side walls and at least one internal web joining the opposed walls one of which constitutes a compression wall to face towards the direction of application of a load tending to bend the beam and the other of which constitutes a tensile wall to face away from that direction characterised in that
(a) the outer envelope is of trapezoidal cross-sectional shape with its opposed walls parallel with one another and one of the opposed walls shorter than the other,
(b) the shorter opposed wall constitutes the compression wall,
(c) the minimum thickness of the compression wall is not less than the minimum thickness of the tensile wall,
(d) the minimum thickness of the side walls is less than the minimum thickness of the tensile wall and
(e) the or each web has a minimum thickness less than the minimum thickness of the compression wall.

In this specification the term "an envelope that is generally quadrilateral" is to be understood as meaning an envelope having four walls that may selectively be straight curved or otherwise shaped with parallel, tapering or curved surfaces. The or each web may also be straight curved or otherwise shaped with parallel, tapering or curved surfaces.

The invention also provides a reinforcing beam according to the preceding paragraph incorporated in a panel of a vehicle such as a door to extend between frame members of the panel and constitute an intrusion beam.

In another embodiment the invention provides a reinforcing beam according to the penultimate paragraph which is pre-formed into generally -U-shape without significant distortion of its cross-sectional shape and is secured at its ends to an open topped or soft topped vehicle to comprise a roll-bar therefor.

The above and other aspects of the present invention will now be described by way of example with reference to the accompanying drawings in which:
Fig. 1 shows diagrammatically in transverse section an intrusion beam located in a vehicle door,
Fig. 2 is a view similar to Fig. 1 of an alternative intrusion beam,
Fig. 3 is a view similar to Fig. 2 of another arrangement,
Figs. 4 and 5 show other cross-sectional shapes for an intrusion beam,
Fig. 6 is a diagrammatic representation of a test method,
Figs. 7 and 8 respectively show, in transverse section, distortion at position -A- in Fig. 3, of the beams of Figs. 1 and 2
Fig. 9 shows a reinforcing beam used as a roll-bar and
Fig. 10 is a graph showing comparative performance of various types of intrusion beam.

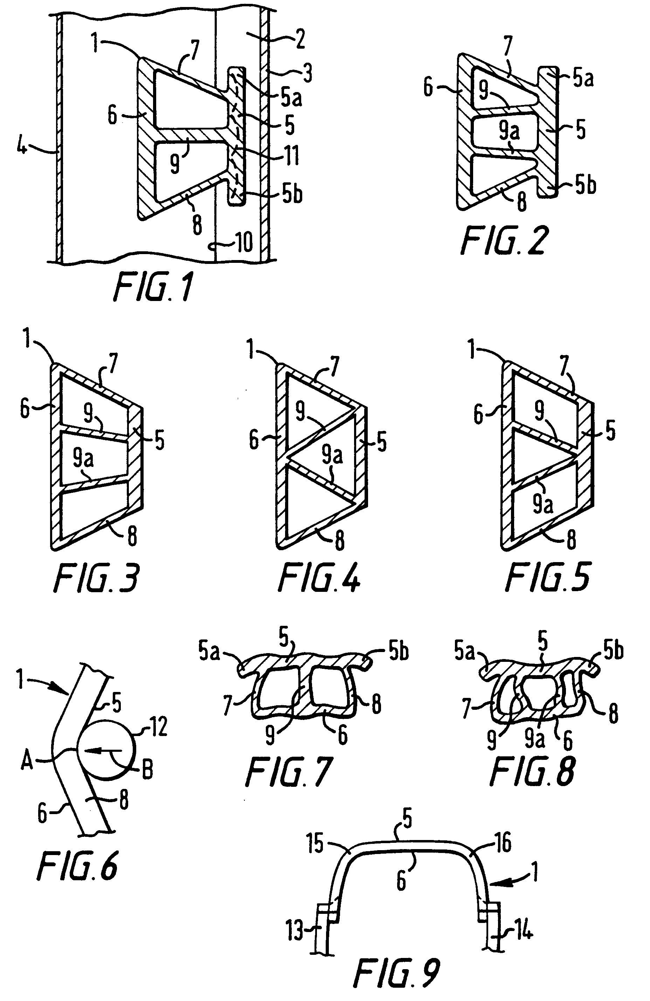

Referring to Fig. 1 an aluminium alloy intrusion beam indicated generally at 1 is disposed within a vehicle door indicated generally at 2 and having an outer skin 3 and an inner trim panel 4. The beam 1 has an outer envelope which in cross-sectional shape is a truncated isosceles triangle and includes a compression wall 5 arranged close to and generally parallel with the outer skin 3, a tensile wall 6 parallel with the wall 5 and two side walls 7 and 8.

Internally the envelope is divided into two chambers by a web extending centrally between the compression wall 5 and the tensile wall 6 and at right angles thereto. The compression wall 5 is thicker than the tensile wall 6 and the latter is thicker than side walls 7 and 8. The web 9 has a thickness between that of the side walls and the tensile wall. Each end of the beam 1 is flattened (not shown) to provide a fixing lug essentially constituting an extension of the compression wall 5 to be riveted, bolted or otherwise mechanically fastened to a shoulder 10 forming part of the frame of the door 2.

At least one of the riveted end connections may permit some longitudinal movement of the beam relative to the door to accommodate different rates of expansion of an aluminium alloy and steel during the painting of the door. If however the door frame is of an aluminium alloy the beam could be welded and/or adhesively bonded thereto.

It will be understood that the space between the tensile wall 6 and the inner trim panel 4 is necessary to accommodate window winding mechanism and other items so the overall depth of the beam 1, that is the distance between the walls 5 or 6 is limited. This restriction together with the desire to use a light metal alloy rather than steel makes the cross-sectional shape of the beam important.

We have found that the envelope shape shown is particularly good with the compression wall 5 shorter than the tensile wall 6 and at least one internal web such as 9 disposed at right angles to the walls 5 or 6.

In Fig. 1 the dotted lines 11 show how the application of a sideways impact on the beam 1 tends to distort the wall 5 with the root of the web 9 constituting a position of stability. The effect can be enhanced by extending the wall 5 at 5a and 5b so that such positions of stability also occur at the roots of the walls 7 and 8. If desired the tensile wall 6 may also be extended (not shown) beyond walls 7 and 8.

Fig. 2 shows a different cross-sectional shape for the beam 1 with two webs 9 and 9a arranged symmetrically of the walls 5 and 6 and being no more than 15° from a right angle with respect to them. The webs 9 and 9a are spaced apart slightly more at the compression wall 5.

Fig. 3 shows an arrangement generally similar to Fig. 2 but with the webs 9 or 9a oppositely inclined. Here the walls 5 or 6 are effectively divided into three by the webs 9 and/or 9a.

Figs. 4 and 5 show arrangements in which the webs 9 and 9a form part of a triangle; with the wall 5 in the case of Fig. 4 and with the central part of the wall 6 in the case of Fig. 5.

In all the arrangements described we have found that 6xxx series alloys may be used with a preference for 6082. If greater strength characteristics are required then 7xxx series such as 7020 may be used.

As mentioned above the walls and web(s) need not be straight and need not have parallel faces. However it is essential that the minimum thickness of the compression wall 5 is not less than the minimum thickness of the tensile wall 6; the minimum thickness of the side walls 7 or 8 is less than the minimum thickness of the tensile wall 6 and the or each web has a minimum thickness less than the minimum thickness of the compression wall 5.

In practice, and with straight walls and web(s) the length of the wall 5 may be 25 to 70 mm; preferably 30 to 60 mm and specifically about 50 mm, the wall 6 may be between 1.1 and 1.8 and preferably 1.2 to 1.7 times longer than the wall 5; the depth of the beam may be of the order of 20 to 40 mm, preferably 30 to 38 mm and the thickness of the side walls 7 or 8 and of the web(s) 9, 9a may be as low as 2 mm. The thickness of both the compression wall 5 and the tensile wall 6 can be between 2 and 16 mm.

Fig. 6 shows how a beam 1 may be subjected to a test of longitudinal bending capability. The beam is supported at its ends (in a manner not shown) and subjected at position 'A' intermediate its ends to a bending force by a 30 cm cylinder 12 extending transversely of the beam and over in the direction of the arrow 'B'.

Fig. 7 shows the result of distortion at position 'A' for the beam of Fig. 1. The walls 5 or 6 are distorted as would be expected with the nodes or positions of stability represented by the line 11 in Fig. 1 controlling the distorted shapes of these walls and the side walls 7 and 8 bulge outwardly. What is remarkable and unexpected however is that the web 9 suffered no lateral distortion. It has suffered compression in a direction between the walls 5 and 6. It is the behaviour of this web during bending of the beam that controls the way in which the beam envelope distorts and enables the beam to retain significant strength characteristics after bending. The reason the beam behaves in this way is that the web 9 is at right angles to the walls 5 or 6. Further control is provided by the extensions 5a or 5b. These ensure that the side walls 7 or 8 do not bow outwardly as much as they would in the absence of the extensions 5a or 5b. Fig. 8 shows that the webs 9 and 9a of Fig. 2 do distort slightly laterally into 's' shape because they are nearly at right angles to the walls 5 or 6. This distortion can be tolerated and the distortion result of Fig. 8 is acceptable.

Distortion of Figs. 3 to 5 would produce results broadly similar to those of Fig. 8. In all cases the provision of the extensions 5a or 5b improves the manner in which the distortion can be controlled. It is important to realize that the controlled distortion referred to herein is plastic deformation and not elastic deformation. In all cases it is desirable that the alloy used and its subsequent treatment should provide ductility greater than 10%.

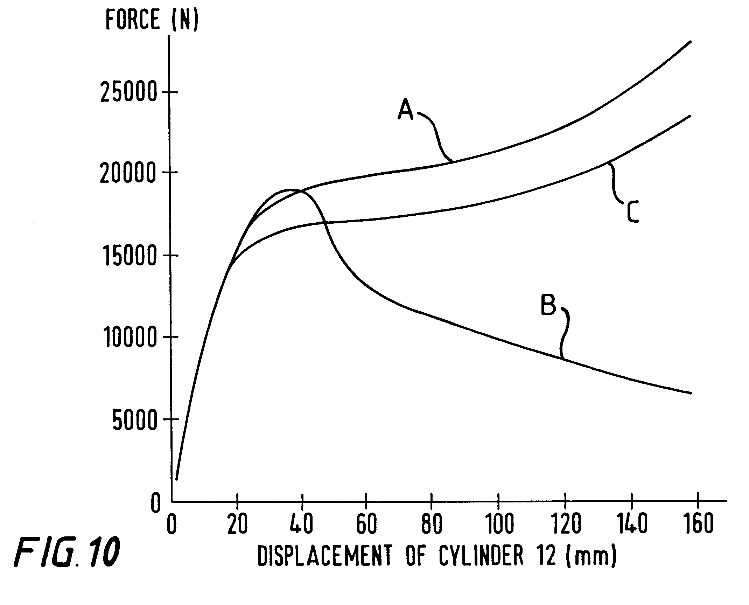

Fig. 9 shows an arrangement in which a reinforcing beam 1 is pre-formed into -U-shape to be mounted at its ends on frame members 13 and 14 of an open topped or soft topped vehicle to comprise a roll-bar. The corners 15 and 16 are formed without significant external distortion of their cross-sectional shape.

In all the arrangements described above it is possible that the cross-sectional shape of the beam 1 could be an asymmetrical trapezoid, for example to fit into a particular available space. However it is desirable that the cross-section should be symmetrical, and in the form of a truncated isosceles triangle since this helps to prevent the beam from twisting during distortion.

We now illustrate load characteristics that have been obtained for intrusion beams of Figs. 1 to 5 having dimensions within the ranges quoted above. In all cases the mass of the beams in Kg/m was approximately 1.36 and the ductility of the alloy used was greater than 10%. The load/unit mass is quoted in KN/Kg
- Fig. 1: 8.05
- Fig. 2: 8.64
- Fig. 3: 8.30
- Fig. 4: 7.20
- Fig. 5: 8.63

It will be understood that the reinforcing beam of the present invention should bend under load without kinking and without disruption of its envelope by tearing since both such events would reduce the energy absorbed during bending.

The likelihood of kinking can be reduced by thickening the compression wall 5 and reducing its length. Such thickening of the compression wall however moves the neutral axis of the beam away from the tensile wall 6 and this increases the risk of tearing. Thus it is preferable that the neutral axis should be closer to the tensile wall 6 than the compression wall 5 and this can be achieved by increasing the length and/or the thickness of the tensile wall.

A tendency towards tearing also depends upon the ductility of the metal alloy. A high ductility reduces the risk of tearing. However it is often difficult and/or expensive to obtain high ductility in strong aluminium alloys. By arranging for the neutral axis of the beam to be closer to the tensile wall 6 than to the compression wall 5 it is possible to use alloys of lower ductility than would otherwise be the case.

The present invention enables an acceptable balance to be struck between the conflicting requirements set out above. The graph of Fig. 10 shows the results that may be obtained when a "reinforcing" beam of the present invention is used as an intrusion beam for a vehicle. In Fig. 10 the results of the test method set out above and shown in Fig. 6 are plotted as displacement of the cylinder 12 in mm against the force applied to the beam at point -A- in Newtons.

Curve -A- is for a known steel tube as mentioned herein; curve -B- is for a beam in the form of a flat bottomed -U-section steel pressing with the outer ends of its arms curled outwardly (also known) and curve -C- is for a beam according to the present invention. As will be apparent the steel pressing (curve B) kinked after only 40 mm distortion while the steel tube (curve A), as would be expected, continued to deflect without collapse.

However as shown in curve C a beam of the present invention also required a steadily increasing bending force without having the weight disadvantage of a steel tube.

The energy absorbed by deflection of the beams is represented by the areas beneath each curve. The beam of the present invention absorbed approximately 90% of the energy of the steel tube. In a particular illustrative example the steel tube absorbed 3.08 KJ; the steel pressing 1.75 KJ and the beam of the present invention 2.70 KJ.

It will be understood that should one of the parallel walls of the envelope of the beam of the present invention tear then curve C would be similar in format to curve B.

## Claims

1. A reinforcing beam (1) comprising a hollow extrusion of a light metal alloy having an outer envelope that is generally quadrilateral in cross-sectional shape with a pair of opposed walls (5,6) joined by a pair of side walls (7,8) and at least one internal web (9) joining the opposed walls (5,6) one of which constitutes a compression wall (5) to face towards the direction of application of a load tending to bend the beam and the other of which constitutes a tensile wall (6) to face away from that direction characterised in that:-
(a) the outer envelope is of trapezoidal cross-sectional shape with its opposed walls (5,6) parallel with one another and one of the opposed walls (5) shorter than the other (6),
(b) the shorter opposed wall (5) constitutes the compression wall (5),
(c) the minimum thickness of the compression wall (5) is not less than the minimum thickness of the tensile wall (6),
(d) the minimum thickness of the side walls (7,8) is less than the minimum thickness of the tensile wall (6) and
(e) the or each web (9) has a minimum thickness less than the minimum thickness of the compression wall (5).

2. A reinforcing beam according to Claim 1 in which the outer envelope has a symmetrical cross-sectional shape in the form of a truncated isosceles triangle.

3. A reinforcing beam according to Claim 1 or Claim 2 in which the compression wall (5) is linearly extended beyond the envelope.

4. A reinforcing beam according to Claim 3 in which the linear extension is symmetrically provided at each end of the compression wall (5).

5. A reinforcing beam according to Claim 3 or Claim 4 in which the tensile walls (6) is extended beyond the envelope.

6. A reinforcing beam according to any one of the preceding claims in which the or each web (9,9a) extends at an angle no more than 15° from a right angle to each of the opposed walls (5,6).

7. A reinforcing beam according to Claim 2 and Claim 6 in which a single web (9) extends symmetrically between the opposed walls (5,6) at right angles thereto.

8. A reinforcing beam according to Claim 2 and Claim 6 in which the or each web (9,9a) extends between the opposed walls (5,6) at positions which divide the tensile wall (6) into approximately equal parts.

9. A reinforcing beam according to any one of the preceding claims incorporated in a panel of a vehicle such as a door (2) to extend between frame members of the panel and constitute an intrusion beam.

10. A reinforcing beam according to Claim 9 which extends generally horizontally.

11. A reinforcing beam according to Claim 9 or Claim 10 in which securing means for the beam allows for limited longitudinal movement between the beam and the panel.

12. A reinforcing beam according to any one of Claims 1 to 8 which is pre-formed into generally -U-shape and is secured at its ends to the body of an open topped or soft topped vehicle to comprise a roll-bar therefor.

13. A reinforcing beam according to any one of the preceding claims incorporated in a vehicle panel.

## Patentansprüche

1. Verstärkungsträger (1) aufweisend ein hohles Strangpreßteil aus einer Leichtmetallegierung, das einen äußeren Mantel aufweist, der im Querschnitt allgemein vierseitig ist, wobei ein Paar einander gegenüberliegender Wände (5, 6) durch ein Paar Seitenwände (7, 8) verbunden ist und wenigstens ein innerer Steg (9) die einander gegenüberliegenden Wände (5, 6) miteinander verbindet, von denen eine eine Kompressionswand (5) bildet, die der Richtung der Aufbringung einer Last mit einer Tendenz zum Biegen des Trägers zugewandt ist, und von denen die andere eine Zugwand (6) bildet, die der genannten Richtung abgewandt ist, weist, dadurch gekennzeichnet,
(a) daß der äußere Mantel eine trapezförmige Querschnittsgestalt aufweist, wobei seine einander gegenüberliegenden Wände (5, 6) parallel zueinander sind und eine der einander gegenüberliegenden Wände (5) kürzer ist als die andere (6),
(b) daß die kürzere der einander gegenüberliegenden Wände (5) die Kompressionswand (5) bildet,
(c) daß die Minimaldicke der Kompressionswand (5) nicht geringer ist als die Minimaldicke der Zugwand (6),
(d) daß die Minimaldicke der Seitenwände (7, 8) geringer ist als die Minimaldicke der Zugwand (6), und
(e) daß der oder jeder Steg (9) eine Minimaldicke aufweist, die geringer ist als die Minimaldicke der Kompressionswand (5).

2. Verstärkungsträger nach Anspruch 1,
wobei der äußere Mantel eine symmetrische Querschnittsgestalt in Form eines abgeschnittenen gleichschenkligen Dreiecks aufweist.

3. Verstärkungsträger nach Anspruch 1 oder Anspruch 2,
wobei die Kompressionswand (5) in linearer Weise über den Mantel hinausgeführt ist.

4. Verstärkungsträger nach Anspruch 3,
wobei die lineare Verlängerung symmetrisch an jedem Ende der Kompressionswand (5) vorgesehen ist.

5. Verstärkungaträger nach Anspruch 3 oder Anspruch 4,
wobei die Zugwand (6) über den Mantel hinausgeführt ist.

6. Verstärkungsträger nach einem der vorausgehenden Ansprüche,
wobei der oder jeder Steg (9, 9a) sich in einem Winkel von nicht mehr als 15° zu einem rechten Winkel auf jede der einander gegenüberliegenden Seitenwände (5, 6) erstreckt.

7. Verstärkungsträger nach Anspruch 2 und Anspruch 6,
wobei sich ein einziger Steg (9) symmetrisch zwischen den einander gegenüberliegenden Wänden (5, 6) und rechtwinklig zu diesen erstreckt.

8. Verstärkungsträger nach Anspruch 2 und Anspruch 6,
wobei sich der oder jeder Steg (9, 9a) zwischen den einander gegenüberliegenden Wänden (5, 6) an Positionen erstreckt, die die Zugwand (6) in etwa in gleiche Teile teilen.

9. Verstärkungsträger nach einem der vorausgehenden Ansprüche, der in ein Tafelteil eines Fahrzeugs, wie eine Tür (2), derart integriert ist, daß er sich zwischen Rahmenelementen des Tafelteils erstreckt und einen Intrusionsträger bildet.

10. Verstärkungsträger nach Anspruch 9,
der sich allgemein horizontal erstreckt.

11. Verstärkungsträger nach Anspruch 9 oder Anspruch 10,
bei dem eine Befestigungseinrichtung für den Träger eine begrenzte Längsbewegung zwischen dem Träger und dem Tafelteil ermöglicht.

12. Verstärkungsträger nach einem der Ansprüche 1 bis 8,
der allgemein U-förmig vorgeformt ist und an seinen Enden an der Karosserie eines oben offenen Fahrzeugs oder eines Fahrzeugs mit weichem Dach befestigt ist, um einen Überrollbügel für das Fahrzeug zu bilden.

13. Verstärkungsträger nach einem der vorausgehenden Ansprüche, der in ein Fahrzeug-Tafelteil integriert ist.

## Revendications

1. Profilé de renfort (1) comportant une extrusion creuse d'un alliage de métaux légers ayant une enveloppe extérieure qui présente généralement une section droite en forme de quadrilatère avec une paire de parois opposées (5,6) raccordées par une paire de parois latérales (7,8), et au moins une âme interne (9), raccordant les parois opposées (5,6), l'une d'elles constituant une paroi de compression (5), en étant orientée vers la direction d'application d'une charge tendant à fléchir le profilé et l'autre constituant une paroi de tension (6) en s'éloignant de cette direction, caractérisé en ce que :
(a) l'enveloppe externe présente une section droite de forme trapézoïdale avec ses parois opposées (5,6) parallèles l'une à l'autre et l'une des parois opposées (5) plus courte que l'autre (6),
(b) la paroi opposée plus courte (5) constitue la paroi de compression (5),
(c) l'épaisseur minimale de la paroi de compression (5) n'est pas inférieure à l'épaisseur minimale de la paroi de tension (6),
(d) l'épaisseur minimale des parois latérales (7,8) est inférieure à l'épaisseur minimale de la paroi de tension (6) et
(e) l'âme (9), ou chaque âme, possède une épaisseur minimale inférieure à l'épaisseur minimale de la paroi de compression (5).

2. Profilé de renfort selon la revendication 1 dans lequel l'enveloppe extérieure présente une section droite symétrique ayant la forme d'un triangle isocèle tronqué.

3. Profilé de renfort selon la revendication 1 ou 2 dans lequel la paroi de compression (5) se prolonge linéairement au delà de l'enveloppe.

4. Profilé de renfort selon la revendication 3 dans lequel le prolongement linéaire est prévu symétriquement à chaque extrémité de la paroi de compression (5).

5. Profilé de renfort selon la revendication 3 ou 4 dans lequel les parois de tension (6) s'étendent au delà de l'enveloppe.

6. Profilé de renfort selon l'une quelconque des revendications précédentes dans lequel l'âme, ou chaque âme (9,9a), s'étend vers chaque paroi opposée (5,6) selon un angle ne dépassant pas 15° à partir d'un angle droit.

7. Profilé de renfort selon les revendications 2 et 6 dans lequel une âme unique (9) s'étend symétriquement entre les parois opposées (5,6), à angle droit par rapport à celles-ci.

8. Profilé de renfort selon les revendications 2 et 6 dans lequel l'âme, ou chaque âme (9,9a) s'étend entre les parois opposées (5,6), en des emplacements qui divisent la paroi de tension (6) en parties approximativement égales.

9. Profilé de renfort selon l'une quelconque des revendications précédentes incorporé dans un panneau d'un véhicule tel qu'une porte (2), devant s'étendre entre des éléments de bati du panneau et qui constitue une barre d'intrusion.

10. Profilé de renfort selon la revendication 9 qui s'étend généralement horizontalement.

11. Profilé de renfort selon la revendication 9 ou 10 dans lequel des moyens de fixation pour le profilé permettent un mouvement longitudinal limité entre le profilé et le panneau.

12. Profilé de renfort selon l'une quelconque des revendications 1 à 8 qui est préformé sous la forme générale d'un U et qui est fixé par ses extrémités au corps d'un véhicule à toit souple ou ouvert de manière à constituer un arceau de renfort.

13. Profilé de renfort selon l'une quelconque des revendications précédentes incorporé dans un panneau de carrosserie de véhicule.
